# EUROPÄISCHE PATENTSCHRIFT

(11) **EP 3 064 849 B1**
(45) Veröffentlichungstag und Bekanntmachung des Hinweises auf die Patenterteilung: **01.05.2024**
(21) Anmeldenummer: 16157998.2
(22) Anmeldetag: 01.03.2016
(51) Int. Cl.: F24F 13/02, F16L 25/00, F16L 37/00, F16L 37/14

(54) **VERTEILERSYSTEM, INSBESONDERE LUFTVERTEILERSYSTEM**
DISTRIBUTOR SYSTEM, IN PARTICULAR AIR DISTRIBUTOR SYSTEM
SYSTEME DE DISTRIBUTION, EN PARTICULIER DIFFUSEUR D'AIR

(30) Priorität: 02.03.2015 DE 102015203705
(43) Veröffentlichungstag der Anmeldung: 07.09.2016
(73) Patentinhaber: Glen Dimplex Deutschland GmbH, 95326 Kulmbach (DE)
(72) Erfinder: HÄRING, Hans-Dieter, 96528 Frankenblick (DE); SCHMIDT, Rainer, 01829 Stadt Wehlen (DE)
(74) Vertreter: FDST Patentanwälte

(56) Entgegenhaltungen:
- EP-A1- 1 375 993
- EP-A2- 2 444 709
- DE-A1-102013 102 252
- GB-A- 2 350 656
- US-A- 4 723 796

## Beschreibung

Die Erfindung betrifft ein Verteilersystem, insbesondere ein Luftverteilersystem mit den Merkmalen des Oberbegriffs des Anspruchs 1.

Bei Luftverteiler - oder Lüftungssystemen, die beispielsweise zur Gebäudeklimatisierung eingesetzt werden, wird die Luft zum Be- und Entlüften der einzelnen Räume üblicherweise ausgehend von einem Luftverteilergehäuse mit Hilfe von Luftkanälen, die häufig als Wellrohre ausgebildet sind, verteilt. Die Wellrohre werden dabei üblicherweise an Anschlussstutzen befestigt. Zur Sicherung des Wellrohrs an einem jeweiligen Anschlussstutzen ist beispielsweise aus der der EP 2 444 709 A2 ein Sicherungsbügel bekannt. Dieser ist U-förmig ausgebildet und weist im Querschnitt gesehen T-förmige Bügelarme auf. Zum Sichern des Wellrohres wird der Sicherungsbügel quer zum Anschlussstutzen auf diesen aufgeschoben, dabei greift ein nach innen gerichteter Schenkel des T-förmigen Bügelarms durch einen Schlitz des Anschlussstutzens hindurch und greift in ein Wellental des Wellrohrs ein, so dass ein Abgleiten des Wellrohrs vom Anschlussstutzen verhindert ist. Ein vergleichbarer Sicherungsbügel ist auch aus der DE 20 2005 003 475 U1 zu entnehmen. Aus der EP 1 375 993 A1 ist weiterhin ein Sicherungsstift oder Sicherungsbügel zu entnehmen, welcher durch zwei fluchtende Löcher im Anschlussstutzen hindurchgesteckt werden muss. Um ein ungewolltes Herausrutschen zu vermeiden, weist dieser Sicherungsstift endseitig einen elastischen Wiederhaken auf. Aus der GB 2 350 656 A ist ein Anschlussstutzen mit Sicherungsbügel bekannt, der zum Einschieben eines Wellrohres vorgesehen ist. Der Sicherungsbügel umfasst gegenüberliegende Sicherungsnasen, die durch Ausnehmungen im Anschlussstutzen hindurchgreifen und in ein Wellental des Wellrohres eingreifen.

Aus der US 4 723 796 A ist weiterhin ein Verbinder für ein Wellrohr zu entnehmen, bei dem ein Gehäuse des Verbinders seitliche, gegenüberliegende Schlitze aufweist, in die ein Sicherungsbügel einschiebbar ist. An den Bügelarmen stehen in radialer Richtung jeweils zumindest zwei Stege hervor, die zwischen sich jeweils einen Wellenberg des Wellrohrs aufnehmen. Die Stege verbreitern sich in Richtung zu einem Ende des Bügelarms um das Wellrohr zu hintergreifen. Ausgehend hiervon liegt der Erfindung die Aufgabe zugrunde, ein Verteilersystem anzugeben, welches eine einfache Montage eines Wellrohres an einem Anschlussstutzen erlaubt und bei dem das Wellrohr am Anschlussstutzen gesichert ist und wobei der Luftverteiler derart ausgestaltet ist, dass auch ein Luftrohr mit vergrößerter Querschnittsfläche einfach anschließbar ist.

Die Aufgabe wird erfindungsgemäß gelöst durch ein Verteilersystem mit den Merkmalen des Anspruchs 1. Bevorzugte Weiterbildungen sind in den Unteransprüchen enthalten.

Das Verteilersystem ist dabei insbesondere als ein Luftverteilersystem eines Lüftungssystems ausgebildet, welches vorzugsweise einen modularen Aufbau aufweist, wie nachfolgend noch näher erläutert wird. Das Verteilersystem weist zumindest ein Wellrohr auf, welches zur Montage an einem Anschlussstutzen insbesondere eines Verteilergehäuses vorgesehen ist. Das Wellrohr wird bei der Montage in einer Einsteckrichtung in den Anschlussstutzen eingeschoben. Zur Sicherung des Wellrohres am Anschlussstutzen ist ein Sicherungsbügel vorgesehen, welcher im montierten Zustand den Anschlussstutzen umgreift. Der Sicherungsbügel weist dabei zwei gegenüberliegende Bügelarme auf. Diese liegen im montierten Zustand typischerweise mit ihren dem Anschlussstutzen zugewandten Innenseiten an einer Außenwandung des Anschlussstutzens an. Im Hinblick auf eine einfache Montage ist der Sicherungsbügel, zumindest die Bügelarme elastisch ausgebildet, so dass er auf den Anschlussstutzen in radialer Richtung aufschnappbar ist. Er braucht also nicht aufwändig quer zur Stutzenrichtung eingeschoben zu werden. Weiterhin weist der Sicherungsbügel an zumindest einem, vorzugsweise an beiden Bügelarmen eine dem Anschlussstutzen zugewandte Sicherungsnase auf, welche durch eine Ausnehmung in der Wandung des Anschlussstutzens hindurch in ein Wellental des Wellrohrs eingreift.

Unter Sicherungsnase wird dabei insbesondere eine lokale Erhebung an der Innenseite des Sicherungsbügels verstanden, d.h. die Sicherungsnase erstreckt sich nur über eine kleine Länge in Umfangsrichtung des Bügelarms. Zur Montage wird das Wellrohr in den Anschlussstutzen eingesteckt. Die Sicherungsnase greift von außen durch die Wandung des Anschlussstutzens hindurch und erstreckt sich bis in das Wellental hinein, so dass eine zuverlässige Sicherung des Wellrohrs erreicht ist. Die Ausnehmung in der Wandung des Anschlussstutzens ist an die Länge der Nase angepasst, d.h. erstreckt sich auch nur über eine begrenzte Umfangslänge, und zwar insbesondere derart, dass zwischen der Sicherungsnase und einer Begrenzung der Ausnehmung ein Formschluss ausgebildet ist, welcher quer zur Einsteckrichtung wirksam ist.

Durch die elastische Ausbildung ist insgesamt der Sicherungsbügel montagefreundlich auf den Anschlussstutzen aufschnappbar. Gleichzeitig schnappt die Sicherungsnase in die Ausnehmung ein. Durch die Elastizität des Sicherungsbügels ist also ein elastisches Einschnappen in das Wellental sichergestellt.

Durch die elastische Ausbildung besteht insbesondere die Möglichkeit, den Sicherungsbügel bereits vor dem Einstecken des Wellrohres am Anschlussstutzen vorzumontieren. Durch die Elastizität wird er verliersicher am Anschlussstutzen gehalten. Aufwändige Widerhaken oder Haltenasen, die den Anschlussstutzen Hintergreifen, um ein Herausrutschen des Sicherungsbügels zu vermeiden, sind nicht erforderlich und insbesondere auch nicht vorgesehen. Der Sicherungsbügel wird insbesondere allein durch die Elastizität insbesondere in Kombination mit der - im eingeschnappten Zustand - formschlüssigen Sicherung durch die Sicherungsnase am Anschlussstutzen gehalten. Die verliersichere Halterung ist von besonderem Vorteil bei einem Luftverteilergehäuse mit einer Vielzahl von Anschlussstutzen, an denen jeweils ein Sicherungsbügel vormontiert gehalten ist.

Die Elastische Ausbildung ermöglicht zudem auch, dass das Wellrohr bei montiertem Sicherungsbügel in den Anschlussstutzen eingeschoben wird. Durch die elastische Ausbildung kann nämlich die Sicherungsnase radial ausweichen.

Erfindungsgemäß ist der Sicherungsbügel derart ausgebildet, dass der Wellschlauch bei bereits am Anschlussstutzen montiertem Sicherungsbügel in Längsrichtung in den Anschlussstutzen einführbar ist und dabei automatisch ein Formschluss mit der Sicherungsnase ausgebildet wird. Der Sicherungsbügel kann daher bereits vormontiert am Anschlussstutzen befestigt sein, also auf diesen aufgeklipst sein, bevor das Wellrohr eingeschoben wird.

Um ein Einstecken des Wellrohrs bei bereits montiertem Sicherungsbügel in einfacher Weise zu ermöglichen, weist die Sicherungsnase in Richtung zur gehäuseabgewandten Seite, also entgegen der Steckrichtung beim Einstecken des Wellrohrs, eine Anlaufschräge auf. Die eine Seitenfläche ist daher schräg bezüglich einer Senkrechten (Radialrichtung senkrecht zur Einsteckrichtung) orientiert. Beim Einstecken des Wellrohrs wird infolge dieser Anlaufschräge der Sicherungsbügel radial nach außen verdrängt und aufgeweitet, so dass die Sicherungsnase radial nach außen weggedrückt wird. Aufgrund der Elastizität des Sicherungsbügels schnappt die Sicherungsnase automatisch in ein jeweiliges Wellental ein und sichert damit das Wellrohr formschlüssig.

Erfindungsgemäß ist der Sicherungsbügel derart ausgebildet, dass ein Herausziehen ohne vorhergehende Demontage des Sicherungsbügels nicht möglich ist. Dadurch ist also eine einfache Montage durch einfaches Einschieben/Einrasten bei gleichzeitig zuverlässigem Formschluss in entgegengesetzter Richtung gewährleistet.

Insgesamt ist in bevorzugter Ausgestaltung die Sicherungsnase bezüglich der Einsteckrichtung asymmetrisch ausgebildet, um zum einen in Einsteckrichtung das Einstecken des Wellrohres zu ermöglichen, gleichzeitig aber das Wellrohr zuverlässig bei einer Zugbeanspruchung entgegen der Einsteckrichtung im Anschlussstutzen zu sichern.

Erfindungsgemäß ist für die Sicherung auf der gegenüberliegenden Seite der Anlaufschräge eine Sperrfläche ausgebildet, die auch bei einer mechanischen Zugbelastung entgegen der Steckrichtung ein Herausrutschen des Wellrohres aus dem Anschlussstutzen verhindert. Die Sperrfläche ist hierzu senkrecht zur Einsteckrichtung orientiert.

Vorzugsweise ist der Sicherungsbügel insgesamt nach Art eines C-Bogens oder teilringartig ausgebildet und umgreift den Anschlussstutzen über einen Winkel, der vorzugsweise größer als 200° ist und insbesondere im Bereich von 220° bis 280° liegt. Insbesondere umschließt der Sicherungsbügel den Anschlussstutzen über einen Winkel von 240° bis 270°. Hierdurch ist allein durch den Bügel bereits eine formschlüssige Sicherung des Bügels am Anschlussstutzen gewährleistet. Durch die Elastizität werden die Bügelenden beim Aufstecken aufgeweitet. Zweckdienlicherweise ist die zumindest eine Sicherungsnase dabei beabstandet von einem Endbereich des Sicherungsbügels ausgebildet. Die zumindest eine Sicherungsnase und vorzugsweise zwei gegenüberliegende Sicherungsnasen sind dabei insbesondere etwa auf Höhe des größten Durchmessers angeordnet. Durch diese in etwa "mittige" Anordnung der Sicherungsnasen wird ein besonders sicherer Sitz und Formschluss erzielt. Gleichzeitig wird durch den sich weiter verlaufenden Endbereich des Sicherungsbügels gewährleistet, dass der Sicherungsbügel den Anschlussstutzen formschlüssig nach Art eines C-Bogens umgreift und damit an diesem zuverlässig befestigt ist.

Gemäß einer ersten Ausführungsvariante ist der Sicherungsbügel insgesamt symmetrisch ausgebildet, d.h. die Sicherungsnasen sind bezogen auf eine mittlere Spiegelebene oder Mittenebene symmetrisch angeordnet. Sie sind also auf gleicher Höhe an einem jeweiligen Bügelarm des Sicherungsbügels ausgebildet.

In einer alternativen Ausgestaltung hierzu ist der Sicherungsbügel asymmetrisch ausgebildet. Hierzu sind die Sicherungsnasen an den Bügelarmen asymmetrisch angeordnet, also insbesondere an unterschiedlichen Umfangspositionen bzgl. der Mittenebene angeordnet. Alternativ oder ergänzend weisen die Bügelarme unterschiedliche Längen auf oder es ist nur an einem Bügelarm eine Sicherungsnase ausgebildet.

Im Hinblick auf eine lagerichtige Montage des Sicherungsbügels weist dieser und/ oder der Anschlussstutzen eine Montagesicherung auf. Durch diese lässt sich der Sicherungsbügel nur in einer vorgegebenen Soll-Orientierung lagerichtig am Anschlussstutzen montieren. Hierdurch ist eine Fehlmontage ausgeschlossen und damit gewährleistet, dass insbesondere die Anlaufschräge nach vorne orientiert ist.

Zur Ausbildung der Montagesicherung sind zweckdienlicherweise Positionierhilfen, insbesondere in Form von Führungselementen am Anschlussstutzen ausgebildet. Die Führungselemente sind dabei beispielsweise nach Art von Führungsstegen ausgebildet. Insbesondere bei der asymmetrischen Ausgestaltung des Sicherungsbügels mit unterschiedlich langen Bügelarmen wird durch die Führungsstege gewährleistet, dass der Sicherungsbügel korrekt auf den Anschlussstutzen aufgesetzt wird.

Alternativ zu einer Ausgestaltung mit zwei Sicherungsnasen ist in einer bevorzugten Weiterbildung nur an einem Bügelarm eine Sicherungsnase ausgebildet.

Insbesondere bei dieser Ausgestaltung ist vorzugsweise ergänzend ein sich in Umfangsrichtung erstreckendes Hintergriffselement am Sicherungsbügel ausgebildet, welches die Wandung des Anschlussstutzens im montierten Zustand formschlüssig hintergreift. Es wird also ein Formschluss zwischen Sicherungsbügel und dem Anschlussstutzen in radialer Richtung ausgebildet, so dass der Sicherungsbügel nicht vom Anschlussstutzen abgleiten kann. Zur Montage wird hierbei das Hintergriffselement zunächst durch die schlitzartige Ausnehmung im Anschlussstutzen eingeführt und anschließend etwas in Umfangsrichtung versetzt, so dass der Formschluss ausgebildet wird.

Weiterhin wird in zweckdienlicher Weiterbildung der Sicherungsbügel mit seinem dem Hintergriffselement gegenüberliegenden Bügelarm in Richtung zum Anschlussstutzen verschwenkt. Durch das Hintergriffselement ist daher eine Art Schwenklager oder Widerlager für eine Schwenkbewegung beim Aufsetzen des Sicherungsbügels ausgebildet.

Durch die elastische Ausbildung des Sicherungsbügels wird auch hierbei ein formschlüssiges Umgreifen des Anschlussstutzens ermöglicht.

Bei dieser Ausgestaltung ist vorzugsweise weiterhin vorgesehen, dass der dem Hintergriffselement gegenüberliegende Bügelarm am Anschlussstutzen fixierbar, insbesondere verrastbar ist. Hierzu ist beispielsweise ein Rastelement ausgebildet, welches mit einem komplementären Rastelement am Anschlussstutzen zusammenwirkt.

An diesem gegenüberliegenden Bügelarm ist in einer weiteren Variante eine zusätzliche Sicherungsnase ausgebildet.

Lüftungssysteme sind üblicherweise für die unterschiedlichsten Raumgegebenheiten konzipiert. Um ein möglichst breites Anwendungsgebiet zu ermöglichen ist das Verteilersystem insbesondere modular ausgebildet und weist die Merkmale des Anspruchs 10 auf. Danach umfasst das Verteilersystem ein (Luft-) Verteilergehäuse mit mehreren Anschlussöffnungen, die vorzugsweise wahlweise mit einer Verschlussplatte verschließbar sind oder an denen jeweils ein Stutzenbauteil mit vorzugsweise zwei Anschlussstutzen anschließbar ist. Die Anschlussstutzen dienen insbesondere zum Anschließen eines Wellrohrs, welches bevorzugt mit dem zuvor beschriebenen Sicherungsbügel gesichert wird.

Das Luftverteilergehäuse ist vorzugsweise insgesamt in etwa nach Art eines Gittergerüsts ausgebildet und weist eine Vielzahl von Anschlussöffnungen auf, die je nach Bedarf mit Stutzenbauteilen belegbar sind. Werden sie nicht benötigt, so können sie über jeweils eine Verschlussplatte verschlossen werden. Die Anschlussöffnungen sind dabei insbesondere in etwa rechteckförmig ausgebildet. Eine jeweilige Anschlussöffnung dient zum Anschluss von vorzugsweise zwei Wellrohren. Das Stutzenbauteil weist daher ein Anschlussteil mit etwa rechteckförmiger Querschnittsfläche auf und weist an seiner dem Luftverteilergehäuse abgewandten Seite zwei Anschlussstutzen mit kreisrundem Querschnitt auf.

Im Hinblick auf das angestrebte modulare System zum Einsatz für unterschiedlichste Raumgegebenheiten weist das Lüftungsgehäuse zumindest ein insbesondere gerüstartiges Gehäusemodul mit den mehreren Anschlussöffnungen auf. Mehrere Gehäusemodule können dabei zu einem gemeinsamen Luftverteilergehäuse entweder übereinander oder auch nebeneinander angeordnet werden. Durch die gittergerüstartige Ausgestaltung der Gehäusemodule ist dabei insgesamt ein gemeinsamer Innen-Hohlraum gebildet, über den die Luftverteilung erfolgen kann. Unter Gerüst wird hierbei allgemein insbesondere verstanden, dass lediglich Quer- Längs- oder Schrägstreben vorgesehen sind und die dadurch gebildeten Öffnungen durch Verschlussplatten oder Stutzenbauteile verschlossen sind. Als Stutzenbauteile werden derartige Elemente verstanden, die zumindest einen Anschlussstutzen aufweisen, an denen ein Rohr oder Wellrohr angeschlossen werden kann.

Zweckdienlicherweise weist das Gehäusemodul dabei eine maximale Einbauhöhe von weniger als 8 cm und insbesondere von etwa 6 cm auf. Dieser Ausgestaltung liegt der Gedanke zugrunde, dass eine Luftverteilung möglichst auch innerhalb eines Fußbodenaufbaus erfolgen sollte. Hier sind jedoch die Einbauhöhen begrenzt, beispielsweise begrenzt durch eine typische Estrichhöhe. Das Lüftungsgehäuse ist dabei im eingebauten Zustand vorzugsweise als ein flaches Luftverteilergehäuse innerhalb eines Fußbodenaufbaus integriert.

Zweckdienlicherweise weisen entsprechend auch die Anschlussstutzen einen Außendurchmesser von kleiner gleich der Einbauhöhe und insbesondere von etwa 6 cm oder geringfügig darunter auf. Auch die Anschlussstutzen führen daher die geringe Einbauhöhe weiter. Weiterhin ist zweckdienlicherweise vorgesehen, dass die Wellrohre zum Einführen in die Anschlussstutzen ausgebildet sind und einen Außendurchmesser von etwas weniger als die Einbauhöhe und insbesondere im Bereich von etwa 53 bis 58 mm aufweisen. Die Wellrohre haben dabei insbesondere einen kreisrunden Querschnitt.

Heutige Standard-Wellrohre für Luftverteilersysteme weisen demgegenüber einen deutlich größeren Durchmesser von typischerweise etwa 75 mm auf. Mit derartigen Wellrohren ist jedoch eine Integration des Luftverteilersystems in einen Bodenaufbau aufgrund des großen Durchmessers nicht möglich.

Bekannte Luftverteilersysteme aus dem Stand der Technik, welche für die Integration in einem Bodenaufbau vorgesehen sind, sehen daher auch beispielsweise rechteckförmige Luftverteilerkanäle vor, die im Boden verlegt werden. Ein Nachteil derartiger, im Querschnitt rechteckförmiger Luftverteilerkanäle ist jedoch in deren geringer Trittfestigkeit zu sehen.

Demgegenüber weisen die speziell angefertigten Wellrohre mit dem geringeren Durchmesser von maximal etwa 60 mm eine hohe Trittfestigkeit auf.

Um weiterhin das gleiche Luftvolumen zur Verfügung zu stellen wie bei herkömmlichen Standard-Wellrohren sind vorzugsweise immer zwei derartiger Wellrohre parallel zu dem bzw. von dem Verteilergehäuse weg geführt und bilden einen gemeinsamen Versorgungsstrang der beispielsweise zu einem gemeinsamen Luftaustritt, einer gemeinsamen Komponente oder zu einem Verbinderelement geführt werden, an dem die beiden parallel geführten Wellrohre wieder zusammengeführt werden (beispielsweise wenn die Wellrohre in einer Wand weitergeführt werden). Insofern weist das Stutzenbauteil bevorzugt jeweils zwei Anschlussstutzen auf, die ein Paar bilden.

Insbesondere für den Fall, dass eine Verteilung mit größeren Wellrohren, beispielsweise Standard-Wellrohren mit etwa 75 mm ermöglicht ist, beispielsweise in einem Lüftungskanal innerhalb der Wand, so ist in erfindungsgemäßer Ausgestaltung ein Adapterstutzen vorgesehen, welcher auf seiner einen Seite zwei eingehende Stutzen zum Anschließen an das Paar Anschlussstutzen des Stutzenbauteils oder auch zum Anschließen eines Wellrohr-Paares aufweist. Weiterhin weist der Adapterstutzen einen abgehenden Stutzen mit vergrößerter Querschnittsfläche, insbesondere mit einem Durchmesser von etwa 75 mm auf. Die eingehenden Stutzen weisen demgegenüber lediglich den zuvor genannten Durchmesser von etwa 60mm auf.

Dieser Adapterstutzen ist dabei erfindungsgemäß ebenfalls über den zuvor beschriebenen Sicherungsbügel an den Anschlussstutzen anschließbar und dadurch gesichert. Hierzu lassen sich die eingehenden Stutzen des Adapterstutzens in die Anschlussstutzen einstecken und weisen weiterhin Ausnehmungen in ihrer Wandung auf, in die die Sicherungsnase des Sicherungsbügels eingreifen.

Die einzelnen Anschlussstutzen sind dabei in zweckdienlicher Weise in einem vorgegebenen Rastermaß nebeneinander angeordnet. Dies betrifft sowohl die Anschlussstutzen eines jeweiligen Stutzenbauteils als auch die Anschlussstutzen einander benachbarter Stutzenbauteile. Entsprechend sind auch die Anschlussöffnungen in einem jeweiligen Gehäusemodul unter einem Rastermaß beabstandet, wobei der Abstand zwischen zwei Anschlussöffnungen derart gewählt ist, dass bei einer Belegung der Anschlussöffnungen mit Stutzenbauteilen die einzelnen Anschlussstutzen zueinander exakt im gewünschten Rastermaß angeordnet sind.

Bei der Montage eines derartigen Lüftungssystems ist es erforderlich, dass die einzelnen Lüftungskomponenten frei von Staub etc. sind. Bei der Montage darf daher kein Staub oder sonstige Verunreinigungen in das Innenvolumen beispielsweise des Luftverteilergehäuse oder auch in die Verteilerschläuche (Wellrohre) eindringen.

Um dies zu gewährleisten ist weiterhin ein insbesondere kappenförmiger Verschlussstopfen vorgesehen, der im montierten Zustand dichtend einen jeweiligen Anschlussstutzen und/oder ein Wellrohr endseitig verschließt.

Zweckdienlicherweise ist dabei der Verschlussstopfen in gleicher Weise wie das Wellrohr formschlüssig gesichert. Hierzu weist der Verschlussstopfen vorzugsweise eine Ausnehmung in seiner Wandung auf und ist in einen jeweiligen Anschlussstutzen einsteckbar. Über die Ausnehmung kann dann eine Sicherungsnase des Sicherungsbügels durch die Wandung hindurchgreifen und den Anschlussstutzen sichern.

Im Hinblick auf eine ausreichende Abdichtung weist der Verschlussstopfen weiterhin endseitig eine konische Dichtfläche auf, die im montierten Zustand dichtend an einer Innenwandung des abzudichtenden Gegenstücks, also des Anschlussstutzens oder des Wellrohrs anliegt.

Weitere Details und bevorzugte Ausgestaltungen sowohl des Sicherungsbügels als auch des modularen Luftverteilersystems sind anhand der Figuren zu entnehmen. Diese zeigen:
- Fig. 1: eine perspektivische Darstellung eines erfindungsgemäßen Verteilergehäuses,
- Fig. 2: eine perspektivische Darstellung eines Seitenteils des in Fig. 1 dargestellten, erfindungsgemäßen Verteilergehäuses mit daran angeschlossenen Stutzenbauteilen sowie Adapterstutzen und Wellrohren,
- Fig. 3: eine ausschnittsweise Querschnittsdarstellung im Bereich eines Anschlussstutzens mit darin eingestecktem Wellrohr, welches über einen Sicherungsbügel gesichert ist,
- Fig. 4A bis 4C: unterschiedliche Ansichten einer ersten Ausführungsvariante eines Sicherungsbügels mit unterschiedlich langen Bügelarmen,
- Fig. 5: eine Aufsicht auf einen Sicherungsbügel einer zweiten Ausführungsvariante mit symmetrischer Ausgestaltung,
- Fig. 6A bis 6D: eine weitere Ausführungsvariante eines Sicherungsbügels in unterschiedlichen Darstellungen mit einem Hintergriffselement und einer zusätzlichen, gegenüberliegenden Sicherungsnase,
- Fig. 7A bis 7D: eine weitere Ausführungsvariante des Sicherungsbügels in unterschiedlichen Perspektiven, ähnlich der Ausführungsvariante gemäß den Fig. 6A bis 6D, jedoch ohne zusätzliche Sicherungsnase,
- Fig. 8: eine Darstellung eines Stutzenbauteils mit zwei Anschlussstutzen und einem eingesteckten Wellrohr, welches über einen Anschlussbügel gesichert ist, sowie
- Fig. 9: eine weitere Darstellung eines Stutzenbauteils mit zwei Anschlussstutzen mit jeweils einem Sicherungsbügel in einer Vormontage-Position.

In den Figuren sind gleich wirkende Teile mit den gleichen Bezugszeichen versehen.

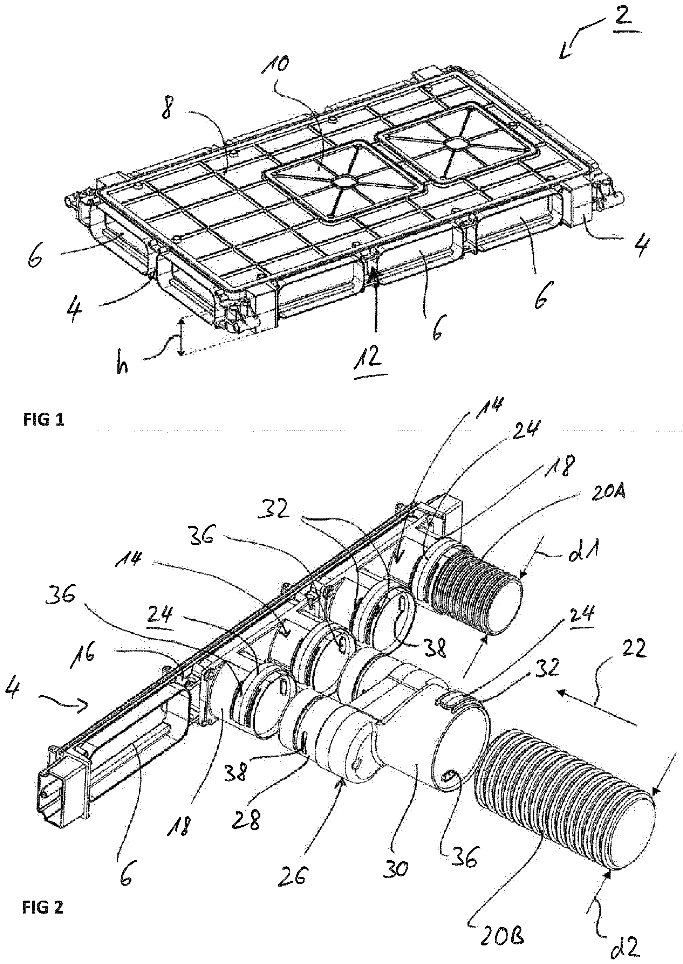

Ein in der Fig. 1 dargestelltes Verteilergehäuse 2 ist als Luftverteilergehäuse zum Einsatz in einem Luftverteilersystem beispielsweise zur Gebäudebelüftung ausgebildet. Das Verteilergehäuse 2 und das gesamte Verteilersystem zeichnen sich durch einen modularen, flexiblen Aufbau aus. Das in der Fig. 1 dargestellte Verteilergehäuse 2 weist miteinander verbundene Seitenteile 4 auf, die jeweils vorzugsweise in etwa rechteckförmige Anschlussöffnungen 6 aufweisen. Die Oberseite des Verteilergehäuses 2 sowie die Unterseite des Verteilergehäuses 2 sind jeweils durch deckel- oder bodenartige Verschlussplatten 8 verschlossen. Auch die einzelnen Anschlussöffnungen 6 lassen sich mit angepassten Verschlussplatten 8 verschließen.

In der deckelseitigen Verschlussplatte 8 sind weiterhin zwei im Ausführungsbeispiel quadratische Verschlussdeckel 10 zu erkennen. Diese können durch Versorgungsstutzen beispielsweise für ein Zuluftrohr oder ein Abluftrohr ersetzt werden.

Im Ausführungsbeispiel weist das Verteilergehäuse 2 ein Längs-Seitenteil 4 mit drei Anschlussöffnungen 6 und ein Quer-Seitenteil 4 mit zwei Anschlussöffnungen auf. Diese miteinander verbundenen Seitenteile 4 bilden ein gerüstartiges Gehäusemodul 12. Die Seitenteile 4 sind dabei derart ausgebildet, dass mehrere derartige Gehäusemodule 12 nebeneinander, beispielsweise in Längsrichtung oder auch in Querrichtung oder auch übereinander, miteinander verbunden werden können. Durch diese modulare Verbindbarkeit lassen sich daher insgesamt Verteilergehäuse 2 mit einer gewünschten Größe ohne Weiteres aufbauen.

Durch eine Variation der Seitenteile 4 lassen sich zudem unterschiedliche Gehäusemodule 12 als Grund-Module bereitstellen. In einer einfachsten Ausführungsvariante besteht dabei ein gerüstartiges Gehäusemodul 12 aus identischen, jeweils lediglich eine Anschlussöffnung 6 aufweisenden Seitenteilen 4, sodass also das Gehäusemodul 12 insbesondere eine quadratische Grundfläche hat. Im Inneren eines Gehäusemoduls 12 sind vorzugsweise keinerlei weitere Einbauten vorgesehen, sondern es ist ein freier Innenraum ausgebildet.

Das Verteilergehäuse 2 ist insgesamt zu einer Montage innerhalb eines Bodenaufbaus geeignet und weist entsprechend lediglich eine Einbauhöhe h von vorzugsweise weniger als 8 cm und insbesondere im Bereich von etwa 6 cm auf. Dadurch eignet sich das Verteilergehäuse 2 auch zur Integration in einem Estrich, welcher typischerweise eine Aufbauhöhe von beispielsweise 8 cm aufweist.

Wie insbesondere auch aus der Fig. 2 hervorgeht, weisen die Anschlussöffnungen 6 eine umlaufende stegartige Wandung auf. Auf diese lässt sich entweder eine hier nicht näher dargestellte Verschlussplatte 8 oder ein Stutzenbauteil 14 aufsetzen. Dieses wird dabei vorzugsweise mittels hier nicht näher dargestellter Schrauben an dem jeweiligen Seitenteil 4 befestigt. Hierzu sind an den Ecken der Anschlussöffnungen 6 jeweils Schraubdome 16 oder sonstige Schrauböffnungen angeordnet, welche vorzugsweise ein Innengewinde aufweisen. Diese Schraubdome 16 oder Schrauböffnungen werden vorzugsweise auch bei der Verbindung von mehreren Gehäusemodulen 12 miteinander verwendet, sodass also beim Zusammenbau mehrerer Gehäusemodule 12 die einzelnen Anschlussöffnungen 6 miteinander fluchten.

Die Anschlussöffnungen 6 weisen vorzugsweise ein Seitenverhältnis von etwa 1 : 2 auf. Sie sind speziell zur Aufnahme eines Stutzenbauteils 14 ausgebildet, welches zwei nebeneinander angeordnete Anschlussstutzen 18 aufweist. Der Abstand von nebeneinander angeordneten Anschlussöffnungen 6 sowie die Anschlussstutzen 18 sind dabei derart ausgebildet, dass insgesamt die in einer Reihe nebeneinander angeordneten Anschlussstutzen 18 in einem festen Rastermaß angeordnet sind.

Die Anschlussstutzen 18 weisen im Ausführungsbeispiel einen kreisrunden Querschnitt auf. Sie dienen zur Aufnahme eines ersten Wellrohres 20A. Dieses wird in einer Steckrichtung 22 in einen jeweiligen Anschlussstutzen 18 eingesteckt und in diesem mithilfe eines Sicherungsbügels 24 gesichert, wie nachfolgend noch näher erläutert wird.

Alternativ zur Aufnahme eines ersten Wellrohres 20A bieten zwei benachbarte Anschlussstutzen 18, welche ein Stutzenpaar bilden, auch die Möglichkeit, dass ein Adapterstutzen 26 an ein derartiges Paar angeschlossen wird. Ein derartiger Adapterstutzen 26 weist zwei eingehende Stutzen 28 auf. Ein jeder dieser eingehenden Stutzen 28 wird ähnlich wie das erste Wellrohr 20A in einen jeweiligen Anschlussstutzen 8 eingesteckt. Weiterhin weist der Adapterstutzen 26 an seiner dem eingehenden Stutzen 28 gegenüberliegenden Seite einen abgehenden Stutzen 30 auf. Dieser weist im Vergleich zu einem jeweiligen eingehenden Stutzen 28 eine vergrößerte Querschnittsfläche auf. In den abgehenden Stutzen 30, der grundsätzlich - bis auf die vergrößerte Querschnittsfläche - vorzugsweise identisch zu den normalen Anschlussstutzen 18 ausgebildet ist, wird ein zweites Wellrohr 20B eingesteckt.

Die beiden Wellrohre 20A,20B unterscheiden sich im Hinblick auf ihre Außendurchmesser d1, d2. Das erste Wellrohr 20A weist einen geringeren Außendurchmesser d1 auf im Vergleich zu dem Außendurchmesser d2 des zweiten Wellrohres 20B. Der Durchmesser d1 liegt dabei üblicherweise etwas unter 6 cm, beispielsweise bei 58 mm. Bei diesen ersten Wellrohren 20A handelt es sich um spezielle an die geringe Einbauhöhe h angepasste Durchmesser d1, um beispielsweise den gewünschten Bodeneinbau des Verteilergehäuses 2 zu ermöglichen.

Demgegenüber handelt es sich bei dem Außendurchmesser d2 um einen Durchmesser, wie er bisher bei derartigen Luftverteilersystemen üblich ist, und der beispielsweise im Bereich von typischerweise 75 mm liegt.

Das modulare Verteilersystem kann ergänzend hier nicht näher dargestellte Verschlussstopfen aufweisen, welche zum Verschließen der jeweiligen Anschlussstutzen 18 bzw. des abgehenden Stutzens 30 dienen. Diese Verschlussstopfen sind dabei derart ausgebildet, dass sie ebenso wie die Wellrohre 20A,20B in einen jeweiligen Stutzen 18,30 eingesteckt und mit dem Sicherungsbügel 24 vorzugsweise auch gesichert werden können. Diese Verschlussstopfen dienen zum Abdichten des Verteilergehäuses 2 bei der Montage, um ein Eindringen von Schmutzpartikeln während der Montage zu verhindern.

Wie weiterhin bereits aus der Fig. 2 zu entnehmen ist, sind die Sicherungsbügel 24 vorzugsweise bereits vormontiert am jeweiligen Stutzenbauteil 14 oder auch am Adapterstutzen 26 befestigt. Sie sind dabei insgesamt in etwa C-bogenförmig ausgebildet und weisen jeweils ein an den Anschlussstutzen 18 bzw. den abgehenden Stutzen 30 angepassten Radius auf. Am jeweiligen Stutzen 18,30 sind weiterhin vorzugsweise außenseitig Führungsstege 32 ausgebildet, die als Positionierhilfen dienen und die einen jeweiligen Bügelarm 34 des Sicherungsbügels 24 aufnehmen.

Zumindest einer der beiden Bügelarme 34 weist weiterhin eine radial nach innen abstehende Sicherungsnase 36 auf, die dazu ausgebildet ist, eine Ausnehmung 38 in der Wandung des Anschlussstutzens 18 bzw. des abgehenden Stutzens 30 zu durchdringen und in einen Stutzen-Innenraum einzudringen. Die Ausnehmung 38 erstreckt sich dabei lediglich über einen geringen Umfang, welcher etwas größer ist als die Ausdehnung der Sicherungsnase 36 in Umfangsrichtung. Der Sicherungsbügel 24 ist insgesamt elastisch ausgebildet und wird quasi von außen auf den jeweiligen Stutzen 18,30 aufgeschnappt, sodass die Sicherungsnase 36 in die Ausnehmung 38 einschnappt. Durch die elastische Ausbildung ist der Sicherungsbügel 24 verliersicher am jeweiligen Stutzen 18,30 gehalten.

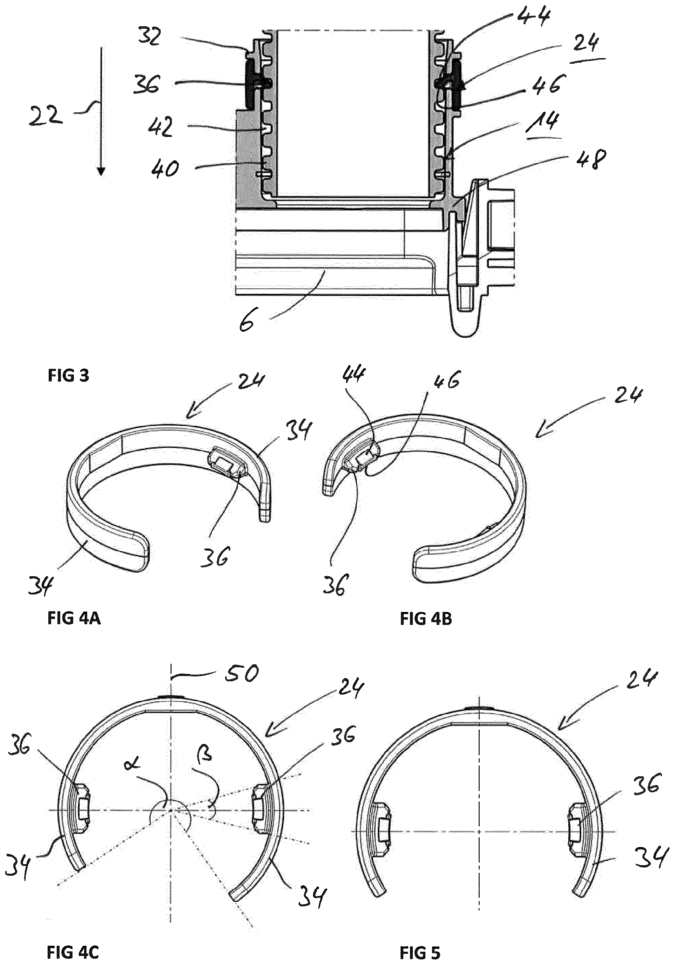

Ein weiterer besonderer Vorteil des Sicherungsbügels 24 ist darin zu sehen, dass das jeweilige Wellrohr 20A,20B oder auch der Adapterstutzen 26 bei jeweils am Stutzen 18,30 vormontiertem Sicherungsbügel 24 in Steckrichtung 22 einsteckbar ist. Durch die elastische Ausgestaltung wird dabei die Sicherungsnase 36 zunächst radial nach außen gedrückt, beispielsweise von einem Wellenberg 40 des jeweiligen Wellrohrs 20A,20B (vgl. Fig. 3). Anschließend schnappt die Sicherungsnase 36 aufgrund der Elastizität wieder in ein Wellental 42 ein, wodurch das jeweilige Wellrohr 20A,20B entgegen der Steckrichtung 22 gesichert ist. Die Sicherungsnase 36 ist dabei derart ausgestaltet, dass sich das Wellrohr 20A,20B bei einer Zugbelastung entgegen der Steckrichtung 22 nicht wieder herausziehen lässt.

Der endmontierte Zustand eines ersten Wellrohrs 20A geht insbesondere aus der Fig. 3 hervor. Bei der in der Fig. 3 dargestellten Ausführungsvariante weist der Sicherungsbügel 24 eine insgesamt schräg bezüglich der Steckrichtung 22 gestellte Sicherungsnase 36 auf. Die Sicherungsnase 36 weist dabei allgemein eine Anlaufschräge 44 sowie eine dieser in Steckrichtung 22 gegenüberliegende Sperrfläche 46 auf. Insbesondere bei der in der Fig. 3 schrägen Ausbildung der Sicherungsnase wird ein Zurückziehen des ersten Wellrohrs 20A entgegen der Steckrichtung 22 zuverlässig vermieden. Ein Demontieren des ersten Wellrohrs 20A ist daher nur möglich, wenn der Sicherungsbügel 24 zunächst demontiert wird.

Aus der Fig. 3 ist weiterhin zu entnehmen, dass das Stutzenbauteil 14 einen Fußbereich 48 hat, mit dem es einen jeweiligen Wandungssteg der Anschlussöffnung 6 in etwa klammerartig umgreift. Wie weiterhin aus der Fig.3 zu entnehmen ist, sind die Durchmesser der Stutzen 18,30 an die Durchmesser der Wellrohre 20A,20B angepasst, sodass die Wellrohre 20A,20B insbesondere bündig mit ihren Wellenbergen 40 an der Innenwandung eines jeweiligen Stutzens 18,30 insbesondere dichtend anliegen.

In den Fig. 4 bis 7 werden nachfolgend unterschiedliche Ausführungsvarianten des Sicherungsbügels 24 erläutert.

Allen Ausführungsvarianten ist gemeinsam, dass der Sicherungsbügel 24 in etwa C-bogenartig ausgebildet ist und eine Innenmantelfläche aufweist, die zumindest weitgehend - bis auf eine Abflachung im oberen mittleren Bereich - teilzylindrisch ist. Diese Innenmantelfläche liegt flächig an einer jeweiligen Außenmantelfläche des jeweiligen Stutzens 18,30 an. Die Sicherungsbügel 24 weisen jeweils zwei Bügelarme 34 auf, die sich ausgehend von einem Mittenteil und beidseitig einer Mittenebene 50 (vgl. beispielsweise Fig. 4C, 6C, 7C) insbesondere kreisbogenförmig erstrecken.

Allen Sicherungsbügeln 24 ist weiterhin gemeinsam, dass sie sich über einen Winkel α erstrecken, welcher typischerweise deutlich über 180° liegt und insbesondere bei über 220° bzw. über 240° und beispielsweise bei 270° liegt.

Demgegenüber erstrecken sich die Sicherungsnasen 36 lediglich über einen Winkelbereich β von beispielsweise 20° bis 45°. Im Ausführungsbeispiel erstrecken sie sich über einen Winkelbereich β von etwa 30°.

Die zumindest eine Sicherungsnase 36 ist dabei weiterhin vorzugsweise im Bereich des größten Durchmessers, also beispielsweise auf der 3-Uhr-Position bzw. der 9-Uhr-Position (90° bzw. 270°) angeordnet. Damit ist die Sicherungsnase 36 jeweils von einem Ende des jeweiligen Bügelarms 34 beabstandet.

Bei der ersten Ausführungsvariante gemäß den Fig. 4A bis 4C ist der Sicherungsbügel 24 bezüglich der Mittenebene 50 insgesamt asymmetrisch ausgebildet, und zwar ist der rechte Bügelarm 34 länger als der linke Bügelarm 34 ausgebildet.

Im Unterschied hierzu ist bei der zweiten Ausführungsvariante gemäß der Fig. 5 der Sicherungsbügel 24 insgesamt symmetrisch mit gleich langen Bügelarmen 24 ausgebildet. Beide Ausführungsvarianten weisen jeweils zwei Sicherungsnasen 36 auf, die bezüglich der Mittenebene 50 spiegelbildlich gegenüberliegend an der 3- bzw. 9-Uhr-Position angeordnet sind.

Die Sicherungsnasen 36 weisen wie bereits zuvor beschrieben jeweils die Anlaufschräge 44 sowie gegenüberliegend zu dieser die Sperrfläche 46 auf. Die Sperrfläche 46 ist dabei bezüglich der Steckrichtung 22 vorzugsweise senkrecht orientiert, wohingegen die Anlaufschräge 44 mit der Steckrichtung 22 einen spitzen Winkel einnimmt, also einen Winkel insbesondere deutlich kleiner 90°. Vorzugsweise liegt dieser spitze Winkel beispielsweise im Bereich zwischen 30° und 60°.

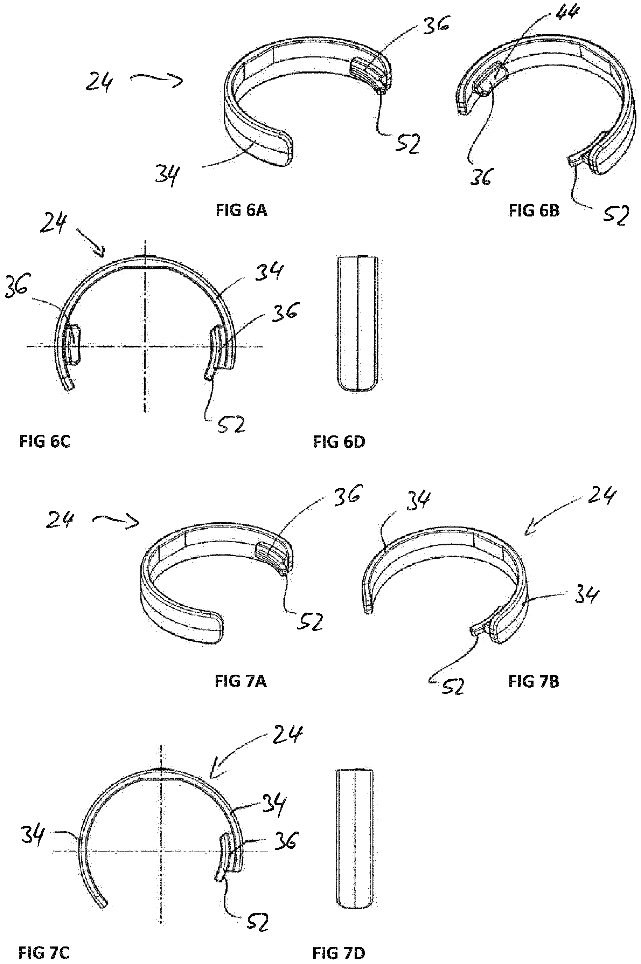

Die Ausführungsvarianten gemäß den Fig.6A bis 6D sowie 7A bis 7D zeigen jeweils Ausgestaltungen, bei denen die Sicherungsbügel 24 jeweils ein Hintergriffselement 52 aufweisen, welches ebenfalls radial nach innen abstehend an einem Bügelarm 34 angeordnet ist. Das Hintergriffselement 52 steht jedoch in Umfangsrichtung über das jeweilige Ende des Bügelarmes 34 über, wie speziell aus den Seitenansichten der Fig. 6C sowie 7C zu entnehmen ist. Das Hintergriffselement 52 ist dabei insbesondere ein Teilstück einer Sicherungsnase 36. Die beiden Ausgestaltungen gemäß den Fig. 6 und 7 unterscheiden sich insbesondere durch die zusätzliche Sicherungsnase 36 auf der 9-Uhr-Position bei der Ausführungsvariante gemäß den Fig. 6A bis 6D. Demgegenüber hat die Ausführungsvariante gemäß den Fig. 7A bis 7D lediglich eine Sicherungsnase 36 mit dem integrierten Hintergriffselement 52.

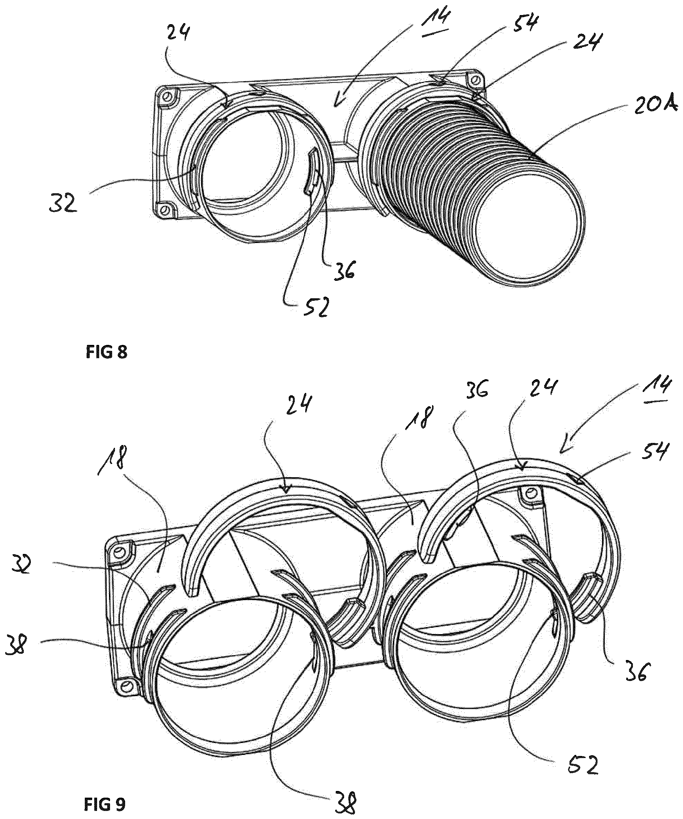

Die Fig. 8 und 9 zeigen jeweils einen Anschlussstutzen 18 mit einem Sicherungsbügel 24 gemäß der Ausgestaltung nach den Fig. 6A bis 6D. In Fig. 8 ist dabei zu erkennen, dass in der vormontierten Position (linker Anschlussstutzen 18) die Sicherungsnase 36 sowie das Hintergriffselement 52 in den Stutzeninnenraum eindringen. Das Hintergriffselement 52 hintergreift dabei einen Wandungsbereich des Anschlussstutzens 18.

Aus der Fig. 9 ist eine Vormontageposition zu erkennen, anhand derer die Montage dieses Sicherungsbügels 24 illustriert wird: Zunächst wird das Hintergriffselement 52 durch die Ausnehmung 38 hindurchgeführt und anschließend in Umfangsrichtung verschoben, sodass der Hintergriff ausgebildet wird. Gleichzeitig bildet das Hintergriffselement 52 mit dem Wandungsbereich bzw. einer Kante der Ausnehmung 38 ein Schwenklager, sodass der Sicherungsbügel 24 mit einer kleinen Schwenkbewegung über den Anschlussstutzen 18 in die in der Fig. 8 dargestellte Endmontageposition eingeschnappt wird. Dabei greift die gegenüberliegende Sicherungsnase 36 auf der 9-Uhr-Position in die gegenüberliegende Ausnehmung 38 ein. Über die Führungsstege 32 erfolgt hierbei eine zuverlässige Führung der Bügelarme 34. Ergänzend oder alternativ ist auf der dem Hintergriffselement 52 gegenüberliegenden Seite ein Rast- oder Schnappelement zum formschlüssigen verrasten mit dem Anschlussstutzen 18 ausgebildet.

Aufgrund der insgesamt asymmetrischen Ausgestaltung der Sicherungsnase 36, die ein Einstecken bei vormontiertem Sicherungsbügel 24 ermöglicht und gleichzeitig ein Herausziehen verhindert, ist eine lagerichtige Montage des Sicherungsbügels 24 erforderlich.

Dies wird beispielsweise durch eine spezielle Ausgestaltung der Führungsstege 32 erreicht. Hierzu ist insbesondere bei unterschiedlich langen Bügelarmen 34 vorgesehen, dass ein Quersteg am Anschlussstutzen 18 ausgebildet ist, welcher einen Anschlag für den insbesondere kürzeren Bügelarm 34 definiert.

Alternativ oder ergänzend weist der Sicherungsbügel 34 eine Markierung 54 auf, die beispielsweise in der Fig. 9 zu erkennen ist. Diese ist im Ausführungsbeispiel vorzugsweise nach Art eines hervorstehenden Pfeilelements ausgebildet.

### Bezugszeichenliste

| | | | |
|---|---|---|---|
| Bezugszeichenliste | | 34 | Bügelarm |
| | | 36 | Sicherungsnase |
| 2 | Verteilergehäuse | 38 | Ausnehmung |
| 4 | Seitenteile | 40 | Wellenberg |
| 6 | Anschlussöffnung | 42 | Wellental |
| 8 | Verschlussplatte | 44 | Anlaufschräge |
| 10 | Verschlussdeckel | 46 | Sperrfläche |
| 12 | Gehäusemodul | 48 | Fußteil |
| 14 | Stutzenbauteil | 50 | Mittenebene |
| 16 | Schraubdom | 52 | Hintergriffselement |
| 18 | Anschlussstutzen | 54 | Markierung |
| 20A | erstes Wellrohr | | |
| 20B | zweites Wellrohr | α | Winkel |
| 22 | Steckrichtung | β | Winkelbereich |
| 24 | Sicherungsbügel | h | Einbauhöhe |
| 26 | Adapterstutzen | d1 | erster Durchmesser |
| 28 | eingehender Stutzen | d2 | zweiter Durchmesser |
| 30 | abgehender Stutzen | | |
| 32 | Führungssteg | | |

## Patentansprüche

1. Verteilersystem, insbesondere Luftverteilersystem, mit einem Verteilergehäuse (2) sowie mit zumindest einem Wellrohr (20A), wobei das Verteilergeäuse (2) zumindest einen Anschlussstutzen (18) aufweist, in den das Wellrohr (20A) in einer Steckrichtung (22) einsteckbar ist, wobei zur Sicherung des Wellrohres (20A) am Anschlussstutzen (18) ein Sicherungsbügel (24) mit zwei einander gegenüberliegenden Bügelarmen (34) vorgesehen ist, der im montierten Zustand den Anschlussstutzen (18) umgreift,
**dadurch gekennzeichnet,**
**dass** der Sicherungsbügel (24) elastisch ausgebildet ist und er zumindest eine Sicherungsnase (36) aufweist, welche als eine lokale Erhebung an der Innenseite des Sicherungsbügels (24) ausgebildet ist und die Bügelarme (34) mit ihren dem Anschlusstutzen (18) zugewandten Innenseiten an einer Außenwandung des Anschlussstutens (18) anliegen, wobei die zumindest eine Sicherungsnase (36) im montierten Zustand durch eine Ausnehmung (38) im Anschlussstutzen (18) hindurch in den Anschlussstutzen (18) hineinreichend elastisch eingeschnappt ist und bei eingestecktem Wellrohr (20A) in ein Wellental (42) des Wellrohrs (20A) eingreift und
**dass** die Sicherungsnase (36) eine Anlaufschräge (44) sowie eine gegenüberliegende Sperrfläche (46) aufweist, wobei die Sperrfläche (46) bezüglich der Steckrichtung (22) senkrecht orientiert ist, wohingegen die Anlaufschräge (44) mit der Einsteckrichtung (22) einen spitzen Winkel einnimmt derart, dass beim Einstecken des Wellrohres (20A) in Steckrichtung (22) bei aufgesetztem Sicherungsbügel (24) ein jeweiliger Wellenberg (40) an der Anlaufschräge (44) entlang gleitet und dadurch den Sicherungsbügel (24) aufweitet und die Sicherungsnase (36) radial nach außen wegdrückt und diese durch die Elastizität des Sicherungsbügels (24) automatisch wieder in ein jeweiliges Wellental (42) einschnappt, wobei ein Adapterstutzen (26) ausgebildet ist, welcher auf seiner einen Seite zwei eingehende Stutzen (28) zum Anschließen an zwei Anschlussstutzen (18) sowie einen abgehenden Stutzen (30) mit im Vergleich zu den eingehenden Stutzen (28) vergrößerter Querschnittsfläche aufweist und die eingehenden Stutzen (28) des Adapterstutzens (26) über den Sicherungsbügel (24) auf die gleiche Weise wie ein Wellrohr (20A,20B) formschlüssig an einem Anschlussstutzen (18) sicherbar sind.

2. Verteilersystem nach dem vorhergehenden Anspruch, bei dem die Sicherungsnase (36) bezüglich der Steckrichtung (22) asymmetrisch ausgebildet ist und eine entgegen der Steckrichtung (22) wirksame Sperrfläche (46) aufweist, die derart ausgebildet ist, dass bei einer Zugbelastung entgegen einer Steckrichtung (22) ein Ausweichen der Sicherungsnase (36) verhindert ist.

3. Verteilersystem nach einem der vorhergehenden Ansprüche, bei dem der Sicherungsbügel (24) nach Art eines C-Bogens den Anschlussstutzen umgreift, wobei der Sicherungsbügel (24) einen Winkel (α) von mehr als 200° und insbesondere im Bereich von 220° bis 280° und bevorzugt im Bereich von 240° bis 270° überstreicht.

4. Verteilersystem nach einem der vorhergehenden Ansprüche, bei dem die zumindest eine Sicherungsnase (36) beabstandet von einem Endbereich des Sicherungsbügels (24) ausgebildet ist und insbesondere etwa auf Höhe des größten Durchmessers angeordnet ist.

5. Verteilersystem nach einem der vorhergehenden Ansprüche, bei dem der Sicherungsbügel (24) asymmetrisch ausgebildet ist, wobei die gegenüberliegenden Bügelarme (34) unterschiedlich lang sind, die Bügelarme (34) jeweils eine Sicherungsnase aufweisen und die Sicherungsnasen asymmetrisch verteilt angeordnet sind, oder nur ein Bügelarm (34) eine Sicherungsnase (36) aufweist.

6. Verteilersystem nach einem der vorhergehenden Ansprüche, bei dem der Sicherungsbügel (24) eine Montagesicherung aufweist, derart, dass der Sicherungsbügel (24) nur in einer vorgegebenen Soll-Orientierung lagerichtig am Anschlussstutzen (18) montierbar ist.

7. Verteilersystem nach einem der vorhergehenden Ansprüche, bei dem am Anschlussstutzen (18) Führungselemente als Positionierhilfen insbesondere in Form von Führungsstegen (32) ausgebildet sind, wobei die Positionierhilfen bevorzugt derart ausgebildet sind, dass nur eine lagerichtige Montage erfolgen kann.

8. Verteilersystem nach einem der vorhergehenden Ansprüche, bei dem die Sicherungsnase (36) ein sich in Umfangsrichtung erstreckendes Hintergriffselement (52) aufweist, welches eine Wandung des Anschlussstutzens (18) im montierten Zustand formschlüssig hintergreift.

9. Verteilersystem nach dem vorhergehenden Anspruch, bei dem der dem das Hintergriffselement (52) gegenüberliegende Bügelarm (34) am Anschlussstutzen (18) fixiert, insbesondere verrastet ist.

10. Verteilersystem nach einem der vorhergehenden Ansprüche, umfassend ein Verteilergehäuse (2) mit mehreren Anschlussöffnungen (6), die wahlweise mit einer Verschlussplatte (8) verschließbar sind oder an denen ein Stutzenbauteil (14) mit bevorzugt zwei Anschlussstutzen (18) anschließbar ist.

11. Verteilersystem nach dem vorhergehenden Anspruch, bei dem das Verteilergehäuse (2) ein gerüstartiges Gehäusemodul (12) mit den mehreren Anschlussöffnungen (6) aufweist, wobei mehrere Gehäusemodule (12) zu einem gemeinsamen Verteilergehäuse (2) übereinander und/oder nebeneinander angeordnet werden können, wobei das Gehäusemodul (12) vorzugsweise eine maximale Einbauhöhe (h) von weniger als 8 cm und insbesondere von etwa 6 cm aufweist.

12. Verteilersystem nach einem der vorhergehenden Ansprüche, bei dem ein insbesondere kappenförmiger Verschlussstopfen vorgesehen ist, der im montierten Zustand dichtend einen jeweiligen Anschlussstutzen (18) und/oder ein Wellrohr (20A) endseitig verschließt.

## Claims

1. Distributor system, in particular air distributor system, with a distributor housing (2) and with at least one corrugated tube (20A), the distributor housing (2) having at least one connecting piece (18), into which the corrugated tube (20A) can be inserted in a plug-in direction (22), a securing bracket (24) with two opposing bracket arms (34) being provided on the connecting piece (18) to secure the corrugated tube (20A), which securing bracket (24) engages around the connecting piece (18) in the mounted state,
**characterized in**
**that** the securing bracket (24) is of elastic design and has at least one securing lug (36), which is designed as a local elevation on the inside of the securing bracket (24) and the bracket arms (34) bear with their inner sides facing the connecting piece (18) against an outer wall of the connecting piece (18), wherein the at least one securing lug (36) in the mounted state is elastically snapped into the connecting piece (18) through a recess (38) in the connecting piece (18) and engages in a wave trough (42) of the corrugated tube (20A) when the corrugated tube (20A) is inserted, and that the securing lug (36) has a starting chamfer (44) and an opposing locking surface (46), wherein the locking surface (46) is oriented perpendicularly with respect to the insertion direction (22), whereas the starting chamfer (44) forms an acute angle with the insertion direction (22) in such a way that when the corrugated tube (20A) is inserted in the direction of insertion (22) with the securing bracket (24) in place, a respective wave crest (40) slides along the starting chamfer (44) and thus expands the securing bracket (24) and pushes the securing lug (36) radially outwards and said securing lug (36) automatically snaps back into a respective wave trough (42) due to the elasticity of the securing bracket (24), an adapter socket (26) being formed, which on its one side has two incoming connecting pieces (28) for connection to two connecting pieces (18) and an outgoing connecting piece (30) with an enlarged cross-sectional area compared to the incoming connecting pieces (28), and the incoming connecting pieces (28) of the adapter socket (26) can be positively secured to a connecting piece (18) via the securing bracket (24) in the same way as a corrugated tube (20A, 20B).

2. Distributor system according to the preceding claim, in which the securing lug (36) is designed asymmetrically with respect to the insertion direction (22) and has a locking surface (46), which acts counter to the insertion direction (22) and is designed in such a way that the securing lug (36) is prevented from deflecting when a tensile load is applied counter to an insertion direction (22).

3. Distributor system according to one of the preceding claims, in which the securing bracket (24) engages around the connecting piece in the manner of a C-bend, wherein the securing bracket (24) sweeps over an angle (α) of more than 200° and in particular in the range from 220° to 280° and preferably in the range from 240° to 270°.

4. Distributor system according to one of the preceding claims, in which the at least one securing lug (36) is formed at a distance from an end region of the securing bracket (24) and in particular is arranged approximately at the level of the largest diameter.

5. Distributor system according to one of the preceding claims, in which the securing bracket (24) is designed asymmetrically, wherein the opposing bracket arms (34) are of different lengths, the bracket arms (34) each have a securing lug and the securing lugs are arranged asymmetrically distributed, or only one bracket arm (34) has a securing lug (36).

6. Distributor system according to one of the preceding claims, in which the securing bracket (24) has a mounting protection in such a way that the securing bracket (24) can only be mounted in the correct position on the connecting piece (18) in a predetermined nominal orientation.

7. Distributor system according to one of the preceding claims, in which guide elements are formed on the connecting piece (18) as positioning aids, in particular in the form of guide webs (32), the positioning aids preferably being formed in such a way that only mounting in the correct position can take place.

8. Distributor system according to one of the preceding claims, in which the securing lug (36) has a rear grip element (52), which extends in the circumferential direction and engages positively behind a wall of the connecting piece (18) in the mounted state.

9. Distributor system according to the preceding claim, in which the bracket arm (34) opposite the rear grip element (52) is fixed, in particular latched, to the connecting piece (18).

10. Distributor system according to one of the preceding claims, comprising a distributor housing (2) with a plurality of connection openings (6), which can optionally be closed with a closure plate (8) or to which a connecting piece component (14) with preferably two connecting pieces (18) can be connected.

11. Distributor system according to the preceding claim, in which the distributor housing (2) has a frame-like housing module (12) with the plurality of connection openings (6), wherein a plurality of housing modules (12) can be arranged one above the other and/or next to one another to form a common distributor housing (2), wherein the housing module (12) preferably has a maximum installation height (h) of less than 8 cm and in particular of about 6 cm.

12. Distributor system according to one of the preceding claims, in which a sealing plug, in particular in the form of a cap, is provided which, in the mounted state, seals the end of a respective connecting piece (18) and/or a corrugated tube (20A).

## Revendications

1. Système de distribution, en particulier système de distribution d'air, avec un boîtier de distribution (2) ainsi qu'avec au moins un tube ondulé (20A), le boîtier de distribution (2) présentant au moins une tubulure de raccordement (18), dans laquelle le tube ondulé (20A) peut être enfiché dans une direction d'enfichage (22), un étrier de sécurité (24) avec deux bras d'étrier (34) opposés l'un à l'autre étant prévu pour la fixation du tube ondulé (20A) sur la tubulure de raccordement (18), lequel étrier s'engage autour la tubulure de raccordement (18) à l'état monté,
**caractérisé en ce**
**que** l'étrier de sécurité (24) est réalisé de manière élastique et comprend au moins un ergot de sécurité (36), qui est réalisé sous la forme d'une élévation locale sur le côté intérieur de l'étrier de sécurité (24) et les bras d'étrier (34) s'appuient avec leurs côtés intérieurs tournés vers la tubulure de raccordement (18) contre une paroi extérieure de la tubulure de raccordement (18), l'état monté, l'au moins un ergot de sécurité (36) est encliqueté de manière élastique dans la tubulure de raccordement (18) à travers un évidement (38) dans la tubulure de raccordement (18) et s'engage dans un creux d'onde (42) du tube ondulé (20A) lorsque le tube ondulé (20A) est inséré, et que l'ergot de sécurité (36) comprend un chanfrein de départ (44) et une surface de blocage (46) opposée, la surface de blocage (46) étant orientée perpendiculairement par rapport à la direction d'enfichage (22), tandis que le chanfrein de départ (44) forme un angle aigu avec la direction d'enfichage (22) de telle sorte, que lors de l'enfichage du tube ondulé (20A) dans la direction d'enfichage (22), lorsque l'étrier de sécurité (24) est en place, un sommet d'onde (40) respectif glisse le long du chanfrein de départ (44) et élargit ainsi l'étrier de sécurité (24) et repousse l'ergot de sécurité (36) radialement vers l'extérieur et celui-ci s'enclenche à nouveau automatiquement dans un creux d'onde (42) respectif grâce à l'élasticité de l'étrier de sécurité (24), une tubulure d'adaptation (26) étant formé, qui comprend sur l'un de ses côtés deux tubulures entrantes (28) pour le raccordement à deux tubulures de raccordement (18) et une tubulure sortante (30) avec une surface de section transversale agrandie par rapport aux tubulures entrantes (28), et les tubulures entrantes (28) de la tubulure d'adaptation (26) peuvent être fixées par complémentarité de formes à une tubulure de raccordement (18) par l'intermédiaire de l'étrier de sécurité (24) de la même manière qu'un tube ondulé (20A, 20B).

2. Système de distribution selon la revendication précédente, dans lequel l'ergot de sécurité (36) est réalisé de manière asymétrique par rapport à la direction d'enfichage (22) et comprend une surface de blocage (46) agissant à l'encontre de la direction d'enfichage (22), qui est réalisée de telle sorte que, en cas de charge de traction à l'encontre d'une direction d'enfichage (22), une déviation de l'ergot de sécurité (36) est empêchée.

3. Système de distribution selon l'une des revendications précédentes, dans lequel l'étrier de sécurité (24) s'engage autour la tubulure de raccordement à la manière d'un arc en C, l'étrier de sécurité (24) balayant un angle (α) supérieur à 200° et notamment compris entre 220° et 280° et de préférence entre 240° et 270°.

4. Système de distribution selon l'une des revendications précédentes, dans lequel l'au moins un ergot de sécurité (36) est réalisé à distance d'une zone d'extrémité de l'étrier de sécurité (24) et est notamment disposé à peu près au niveau du plus grand diamètre.

5. Système de distribution selon l'une des revendications précédentes, dans lequel l'étrier de sécurité (24) est réalisé de manière asymétrique, les bras d'étrier (34) opposés étant de longueurs différentes, les bras d'étrier (34) comprenant chacun un ergot de sécurité et les ergots de sécurité étant répartis de manière asymétrique, ou seul un bras d'étrier (34) comprenant un ergot de sécurité (36).

6. Système de distribution selon l'une des revendications précédentes, dans lequel l'étrier de sécurité (24) comprend une sécurité de montage, de telle sorte que l'étrier de sécurité (24) ne peut être monté en position correcte sur la tubulure de raccordement (18) que dans une orientation théorique prédéfinie.

7. Système de distribution selon l'une des revendications précédentes, dans lequel des éléments de guidage sont réalisés sur la tubulure de raccordement (18) en tant qu'aides au positionnement, en particulier sous la forme nervures de guidage (32), les aides au positionnement étant de préférence réalisées de telle sorte que seul un montage en position correcte peut être effectué.

8. Système de distribution selon l'une des revendications précédentes, dans lequel l'ergot de sécurité (36) comprend un élément de prise arrière (52) s'étendant dans la direction périphérique, qui s'engage par complémentarité de forme derrière une paroi de la tubulure de raccordement (18) à l'état monté.

9. Système de distribution selon la revendication précédente, dans lequel le bras d'étrier (34) opposé à l'élément de prise arrière (52) est fixé, en particulier enclenché, sur la tubulure de raccordement (18).

10. Système de distribution selon l'une des revendications précédentes, comprenant un boîtier de distribution (2) avec plusieurs ouvertures de raccordement (6), qui peuvent être fermées au choix avec une plaque de fermeture (8) ou auxquelles peut être raccordé un composant de tubulure (14) avec de préférence deux tubulures de raccordement (18).

11. Système de distribution selon la revendication précédente, dans lequel le boîtier de distribution (2) comprend un module de boîtier (12) en forme d'échafaudage avec les plusieurs ouvertures de raccordement (6), plusieurs modules de boîtier (12) pouvant être disposés les uns au-dessus des autres et/ou les uns à côté des autres pour former un boîtier de distribution (2) commun, le module de boîtier (12) comprenant de préférence une hauteur de montage maximale (h) inférieure à 8 cm et en particulier d'environ 6 cm.

12. Système de distribution selon l'une des revendications précédentes, dans lequel il est prévu un bouchon de fermeture, en particulier en forme de capuchon, qui, à l'état monté, ferme de manière étanche une tubulure de raccordement respective (18) et/ou un tube ondulé (20A) à son extrémité.
